# EUROPEAN PATENT SPECIFICATION

(11) **EP 1 978 685 B1**
(45) Date of publication and mention of the grant of the patent: **25.05.2011**
(21) Application number: 07105680.8
(22) Date of filing: 04.04.2007
(51) Int. Cl.: H04L 12/56

(54) **Method and apparatus for dynamic quality of service modification**
Verfahren und Vorrichtung für dynamische Dienstqualitätsänderung
Procédé et appareil pour la qualité dynamique d'une modification de service

(43) Date of publication of application: 08.10.2008
(73) Proprietor: RESEARCH IN MOTION LIMITED, Waterloo, Ontario N2L 3W8 (CA)
(72) Inventor: Cormier, Jean-Philippe, Ottawa, Ontario, K1S 5T4 (CA); Plestid, Thomas Leonard Trevor, Ontario, K2B 5Z4 (CA); Islam, Muhammad Khaledul, Ontario, K2K 3N4 (CA)
(74) Representative: Hibbert, Juliet Jane Grace

(56) References cited:
- EP-A1- 1 619 917
- WO-A-03/071813
- WO-A-2006/130959

## Description

### TECHNICAL FIELD OF THE APPLICATION

The present disclosure generally relates to wireless packet data service networks. More particularly, and not by way of any limitation, the present disclosure is directed to a mobile communication device and related data service network capable of updating the quality of service provided to the mobile communication device as required.

### BACKGROUND

The present disclosure is directed toward efficient utilization of wireless resources for communication between a network and a mobile communication device. The resources available for wireless communication are necessarily limited. It is, therefore, desirable to provide only the resources required for a given communication in order to conserve and optimize available bandwidth. To this end, certain wireless messaging networks provide for a default quality of service (QoS). Although this default quality of service is generally suitable for certain types of communications, it may not be suitable for other types of communication.
W003071813 describes optimizing a radio link by acquiring at least OSI layer one and two performance measurements, determining an optimum setting collection for at least OSI layer three to a top layer, then configuring at least the OSI layer three to the top layer based upon the optimum setting collection. The top layer is at least OSI layer four.
W02006130959 relates to a method of providing service performance information to a carrier for an application over a network, wherein parameters relating to the application are transmitted to a mobile device, and the mobile device stores information relating to packets transmitted for the application. Should the information stored exceed the parameters, an alert is sent to the network.
EP1619917 describes a technique for the end terminal provided with services to handle QoS process. According to this technique, a terminal based QoS management scheme is implemented to achieve end-to-end QoS wherein the end terminal is responsible for handling of the QoS related functions. In order for QoS management to be handled at terminal, the terminal needs to know the network conditions and external state of entities in order to know what action to be taken. For example, the terminal performs monitoring and usage collection. These performance data are then reported to a central server (SLA manager). The central server collects these data from all terminals within its administration domain. The central server also has access to information on the QoS to be given to individual terminals, such as service level. Based on the information, the central server decides what action to be taken by individual terminal and enforces these actions into the affected terminals.

### SUMMARY OF THE DISCLOSURE

The present disclosure relates to a device, method and communication node for dynamically modifying a quality of service level within a wireless packet data service network. According to a first aspect, the present disclosure relates to a mobile communication device. The mobile communication device includes a secure channel driver operable to establish a secure tunnel between the mobile communication device and a remote network via a wireless network; a first client application operable to communicate with a first server application via a first socket within the secure tunnel and associated with a first quality of service; a second client application operable to communicate with a second server application via a second socket within the secure tunnel and associated with a second quality of service different from the first quality of service; and a quality of service modification module operable to request the second quality of service from the wireless network when the second quality of service is appropriate and to request a quality of service different from the second quality of service when the second quality of service is not appropriate.

In certain embodiments, the first client application is one of a messaging client application, a contacts management client application, a calendar management application or a browser application. In certain embodiments, the second application is one of a streaming audio client, a streaming video client, a VoIP client or an FTP client. In certain embodiments, the wireless network is a GSM network or others such as an Enhanced Data Rates for GSM Evolution (EDGE) network, an Integrated Digital Enhanced Network (IDEN), a Universal Mobile Telephone System (UMTS) network, a Code Division Multiple Access (CDMA) network, or any 3rd Generation (3G) network. In certain embodiments, the quality of service monitor is further operable to identify when the second quality of service is not appropriate. In certain embodiments, the service modification module is operable to request the first quality of service from the wireless network when the second quality of service is not appropriate. In certain embodiments, the quality of service monitor and quality of service module comprise a portion of a transport stack within the mobile communication device.

According to a second aspect, the present disclosure relates to a method of dynamically modifying the quality of service provided to a mobile communication device. The method includes the steps of communicating at a first quality of service through a secure channel established between the mobile communication device and a remote network through a wireless network; determining that a second quality of service, different from the first quality of service, is appropriate; and requesting, from a network node associated with the wireless network, the second quality of service.

According to a third aspect, the present disclosure relates to a communications node. The communications node includes means for supporting communication between a mobile communication device and a remote network via a secure channel across a wireless network having at least a first quality of service and a second quality of service; and means for changing the quality of service from the first quality of service to the second quality of service according to a request to change the quality of service.

### BRIEF DESCRIPTION OF THE DRAWINGS

A more complete understanding of the embodiments of the present disclosure may be had by reference to the following Detailed Description when taken in conjunction with the accompanying drawings wherein:

Figure 1A depicts an exemplary network environment including a wireless packet data service network wherein an embodiment of the present disclosure may be practiced;

Figure 1B depicts an exemplary network environment including a wireless packet data service network wherein an embodiment of the present disclosure may be practiced;

Figure 2 depicts a software architectural view of a mobile communication device operable to communicate within a wireless packet data service network according to one embodiment;

Figure 3 depicts a block diagram of a mobile communication device operable to communicate within a wireless packet data service network according to one embodiment;

Figure 4 depicts a schematic view of a wireless network operable to provide data service according to one embodiment;

Figure 5 depicts a message flow diagram according to one embodiment of the present disclosure; and

Figure 6 depicts a flow chart illustrating a method for dynamic quality of service (QoS) management according to one embodiment.

### DETAILED DESCRIPTION OF THE DRAWINGS

A system and method of the present disclosure will now be described with reference to various examples of how the embodiments can best be made and used. Identical reference numerals are used throughout the description and several views of the drawings to indicate identical or corresponding parts, wherein the various elements are not necessarily drawn to scale.

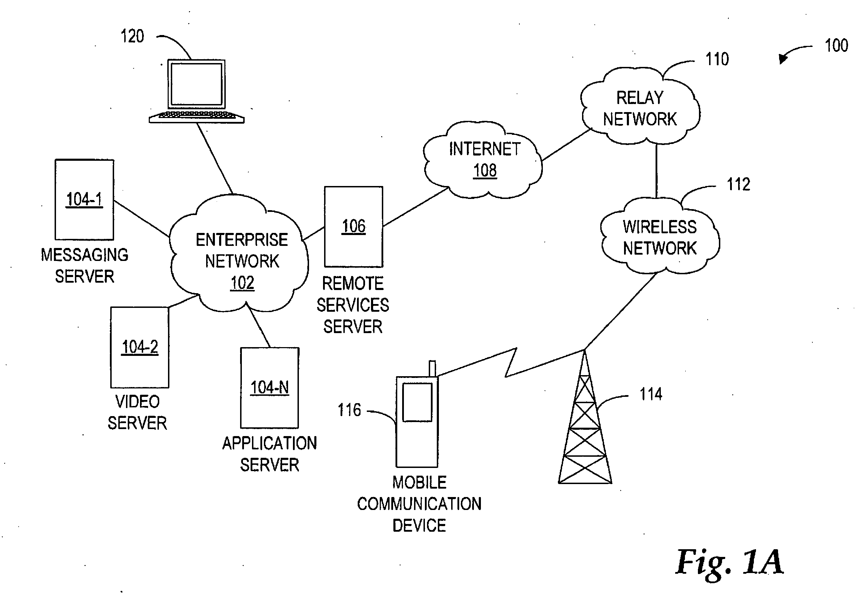

Referring now to the drawings, and more particularly to Figure 1A, depicted therein is an exemplary network environment 100 including a wireless packet data service network 112 wherein an embodiment of the present system may be practiced. An enterprise network 102, which may be a packet-switched network, can include one or more geographic sites and be organized as a local area network (LAN), wide area network (WAN) or metropolitan area network (MAN), et cetera, for serving a plurality of corporate users.

A number of application servers 104-1 through 104-N disposed as part of the enterprise network 102 are operable to provide or effectuate a host of internal and external services such as email, video mail, Internet access, corporate data access, messaging, calendaring and scheduling, information management, and the like. In particular, application server 104-1 is a messaging server and 104-2 is a streaming video server. Accordingly, a diverse array of personal information appliances such as desktop computers, laptop computers, palmtop computers, et cetera, although not specifically shown in Figure 1A, may be operably networked to one or more of the application servers 104-i, i = 1, 2,...,N, with respect to the services supported in the enterprise network 102.

Additionally, a remote services server 106 may be interfaced with the enterprise network 102 for enabling a corporate user to access or effectuate any of the services from a remote location using a suitable mobile communication device 116. Mobile communication device 116 may be any communications device capable of communicating via wireless means including but not limited to a cellular telephone, a wireless personal digital assistant, a wireless pager or a wireless enabled laptop computer, as examples. By way of example, mobile communication device 116 may be a data-enabled handheld device capable of receiving and sending messages, web browsing, interfacing with corporate application servers, et cetera. A secure communication link with end-to-end encryption may be established that is mediated through an external IP network, i.e., a public packet-switched network such as the Internet 108, as well as the wireless packet data service network 112 operable with mobile communication device 116 via suitable wireless network infrastructure that includes a base station (BS) 114. In one embodiment, a trusted relay network 110 may be disposed between the Internet 108 and the infrastructure of wireless packet data service network 112.

For purposes of the present disclosure, the wireless packet data service network 112 may be implemented in any known or heretofore unknown mobile communications technologies and network protocols. For instance, the wireless packet data service network 112 may be comprised of a General Packet Radio Service (GPRS) network that provides a packet radio access for mobile devices using the cellular infrastructure of a Global System for Mobile Communications (GSM)-based carrier network. In other implementations, the wireless packet data service network 112 may comprise an Enhanced Data Rates for GSM Evolution (EDGE) network, an Integrated Digital Enhanced Network (IDEN), a Universal Mobile Telephone System (UMTS) network, a Code Division Multiple Access (CDMA) network, or any 3rd Generation (3G) network. By way of providing an exemplary embodiment, the teachings of the present disclosure will be illustrated with a GPRS-based carrier network, although those skilled in the art should readily recognize that the scope of the present disclosure is not limited thereby.

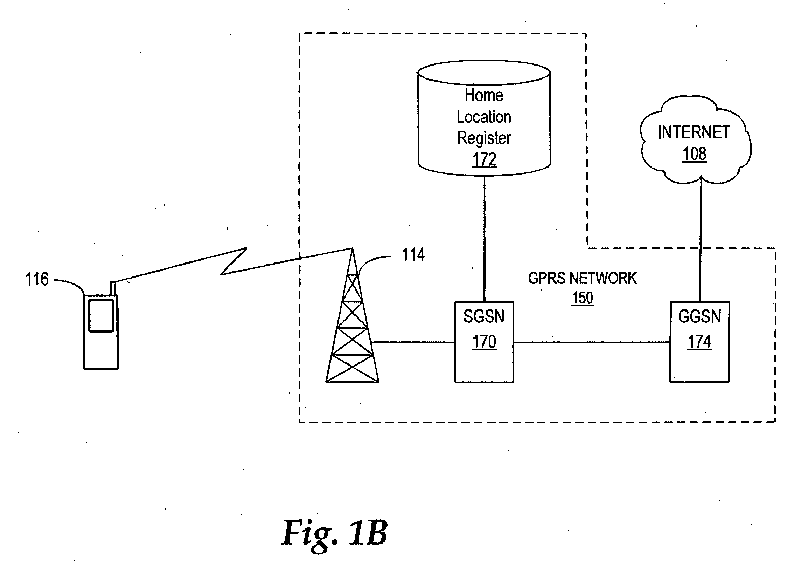

Figure 1B depicts additional details of an exemplary wireless service network operable with a mobile communication device in accordance with one embodiment. As illustrated, reference numeral 150 refers to a GPRS network operable as the wireless packet data service network with respect to mobile communication device 116. As noted above, base station 114 serves mobile communication device 116 via the air interface using applicable radio layer protocols.

It is well-known that GPRS uses a packet-switching technique to transfer both high-speed and low-speed data and signaling in an efficient manner over GSM radio networks. Packet switching means that GPRS radio resources are used only when users are actually sending or receiving data. Rather than dedicating a radio channel to a mobile data user, e.g., mobile communication device 116, for a fixed period of time, the available radio channels can be concurrently shared between several users. Therefore, GPRS is designed to support from intermittent and bursty data transfers (e.g., web browsing) to occasional transmission of large volumes of data (e.g., File Transfer Protocol (FTP) communications). Allocation of GPRS radio channels can be flexible: from 1 to 8 radio interface timeslots can be allocated per one Time Division Multiple Access (TDMA) frame. Typically, timeslots are shared by the active users, and uplinks and downlinks are allocated separately. Various radio channel coding schemes are available to allow a range of data bit transfer rates.

Two additional network nodes are provided within a GSM network in order to implement a packet-switched data transfer service. A Serving GPRS Support Node (SGSN) 170, which is coupled to a Home Location Register (HLR) 172 and disposed at the same hierarchical level as a Mobile Switching Center (MSC) of the circuit-switched cellular network (not shown), is operably coupled to base station 114 and keeps track of the location of a GPRS user such as the user of mobile communication device 116. Further, SGSN 170 is responsible for performing security functions and handling access control with respect to mobile communication device 116. A Gateway GPRS Support Node (GGSN) 174 provides interworking with the internet 108, and is operably coupled to one or more SGSNS, e.g., SGSN 170, via an IP-based GPRS backbone network.

In order to access the packet data service, mobile communication device 116 makes its presence known to the network by performing what is known as a GPRS Attach. Thereafter, to send and receive packet data, mobile communication device 116 activates the packet data address that it wants to use. This operation renders mobile communication device 116 "visible" in the corresponding GGSN, and interworking with external data networks can then begin. User data is transferred transparently between mobile communication device 116 and the external data networks with a method known as encapsulation and tunneling wherein data packets are equipped with GPRS-specific protocol information and transferred transparently between mobile communication device 116 and GGSN 174.

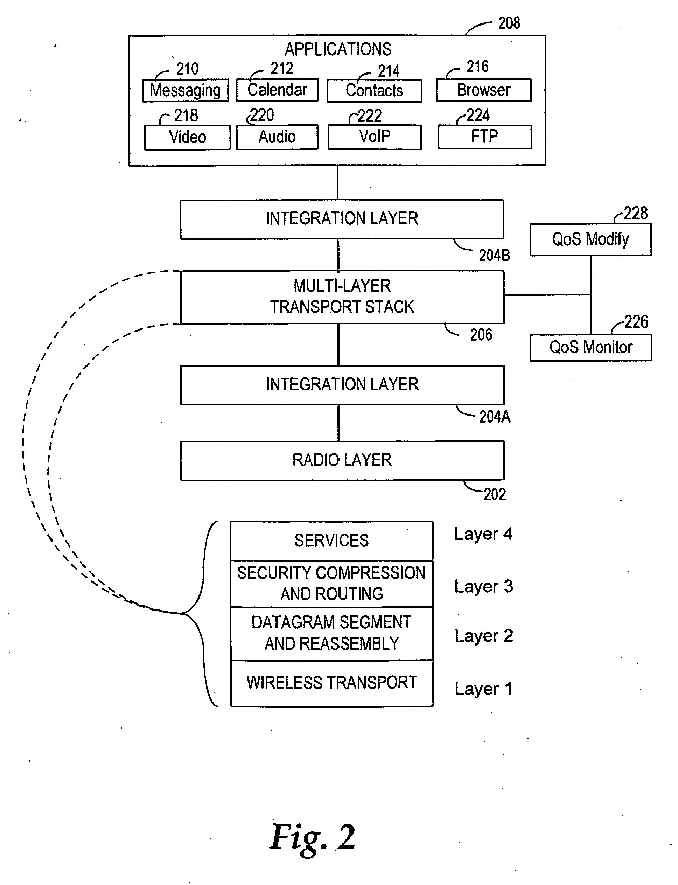

Figure 2 depicts a software architectural view of a mobile communication device according to one embodiment. A multi-layer transport stack (TS) 206 is operable to provide a generic data transport protocol for any type of corporate data, including email, via a reliable, secure and seamless continuous connection to a wireless packet data service network. As illustrated in this embodiment, an integration layer 204A is operable as an interface between a radio layer 202 and the transport stack 206 of mobile communication device 116.

A second integration layer 204B is provided for interfacing between the transport stack 206 and a number of user applications 208 supported on mobile communication device 116, which include messaging client 210, calendar/scheduler client 212, contacts management client 214, browser 216, streaming video client 218, streaming audio client 220, VoIP client 222 and FTP client 224. It will be understood by those of skill in the art that mobile communication device 116 may include more applications or fewer applications. Although not specifically shown, the transport stack 206 may also be interfaced with the operating system of mobile communication device 116. In another implementation, the transport stack 206 may be provided as part of a data communications client module operable as a host-independent virtual machine on a mobile device.

The bottom layer (Layer 1) of the transport stack 206 is operable as an interface to the wireless network's packet layer. Layer 1 handles basic service coordination within the exemplary network environment 100 shown in Figure 1A. For example, when mobile communication device 116 roams from one carrier network to another, Layer 1 verifies that the packets are relayed to the appropriate wireless network and that any packets that are pending from the previous network are rerouted to the current network. The top layer (Layer 4) exposes various application interfaces to the services supported on the mobile communication device. The remaining two layers of the transport stack 206, Layer 2 and Layer 3, are responsible for datagram segmentation/reassembly and security, compression and routing, respectively.

Mobile communication device 116 incorporates a QoS monitoring module 226 and a QoS modification module 228. It will be understood by those of skill in the art that the separate modules are depicted in this manner only for convenience, and that the functionality represented by these modules will generally be incorporated into one of the other modules depicted in Figure 2. QoS monitoring module 226 incorporates the functionality to determine the current and immediate future QoS needs of mobile communication device 116. QoS modification module 228 incorporates the functionality to modify the QoS when needed. The manner of operation of each of QoS modules 226, 228 is discussed in further detail below.

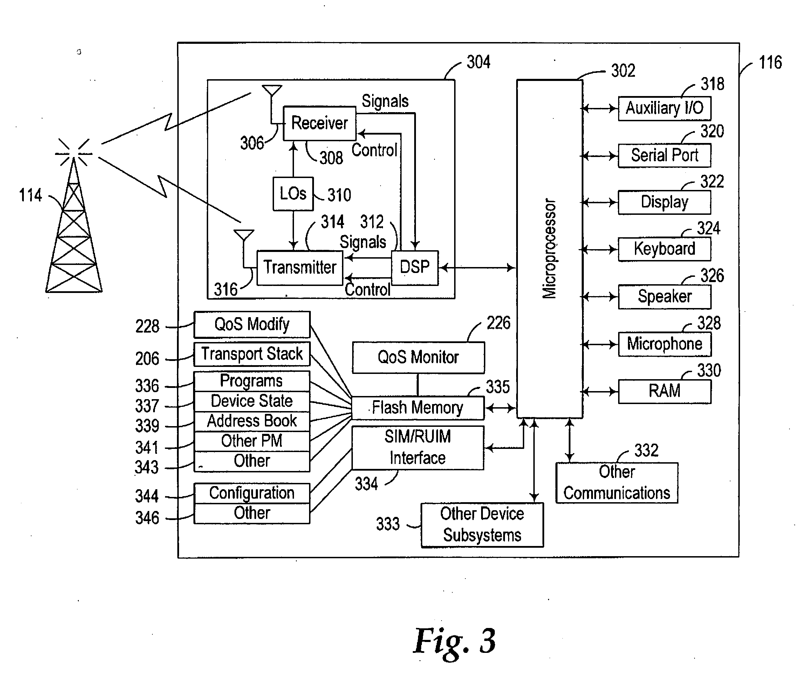

Figure 3 depicts a block diagram of a mobile communication device according to one embodiment. It will be recognized by those skilled in the art upon reference hereto that although an embodiment of mobile communication device 116 may comprise an arrangement similar to one shown in Figure 3, there can be a wide variety of variations and modifications, in hardware, software or firmware, with respect to the various modules depicted. Accordingly, the arrangement of Figure 3 should be taken as illustrative rather than limiting with respect to the embodiments of the present disclosure.

A microprocessor 302 providing for the overall control of an embodiment of mobile communication device 116 is operably coupled to a communication subsystem 304 which includes a receiver 308 and transmitter 314 as well as associated components such as one or more local oscillator (LO) modules 310 and a processing module such as a digital signal processor 312. As will be apparent to those skilled in the field of communications, the particular design of the communication module 304 may be dependent upon the communications network with which the mobile communication device 116 is intended to operate.

In one embodiment, the communication module 304 is operable with both voice and data communications. Regardless of the particular design, however, signals received by antenna 306 through base station 114 are provided to receiver 308, which may perform such common receiver functions as signal amplification, frequency down conversion, filtering, channel selection, analog-to-digital (A/D) conversion, and the like. Similarly, signals to be transmitted are processed, including modulation and encoding, for example, by digital signal processor 312, and provided to transmitter 314 for digital-to-analog (D/A) conversion, frequency up conversion, filtering, amplification and transmission over the air-radio interface via antenna 316.

Microprocessor 302 also interfaces with further device subsystems such as auxiliary input/output (I/O) 318, serial port 320, display 322, keyboard 324, speaker 326, microphone 328, random access memory (RAM) 330, a short-range communications subsystem 332, and any other device subsystems generally labeled as reference numeral 333. To control access, a Subscriber Identity Module (SIM) or Removable User Identity Module (RUIM) interface 334 is also provided in communication with the microprocessor 302.

In one implementation, SIM/RUIM interface 334 is operable with a SIM/RUIM card having a number of key configurations 344 and other information 346 such as identification and subscriber-related data. Operating system software and transport stack software may be embodied in a persistent storage module (i.e., non-volatile storage) such as flash memory 335. In one implementation, flash memory 335 may be segregated into different areas, e.g., storage area for computer programs 336 as well as data storage regions such as device state 337, address book 339, other personal information manager (PIM) data 341, and other data storage areas generally labeled as reference numeral 343. QoS monitor 226 and QoS modification module 228 are also shown disposed in flash memory 335, though those of skill in the art will appreciate that these components could be disposed in alternate locations.

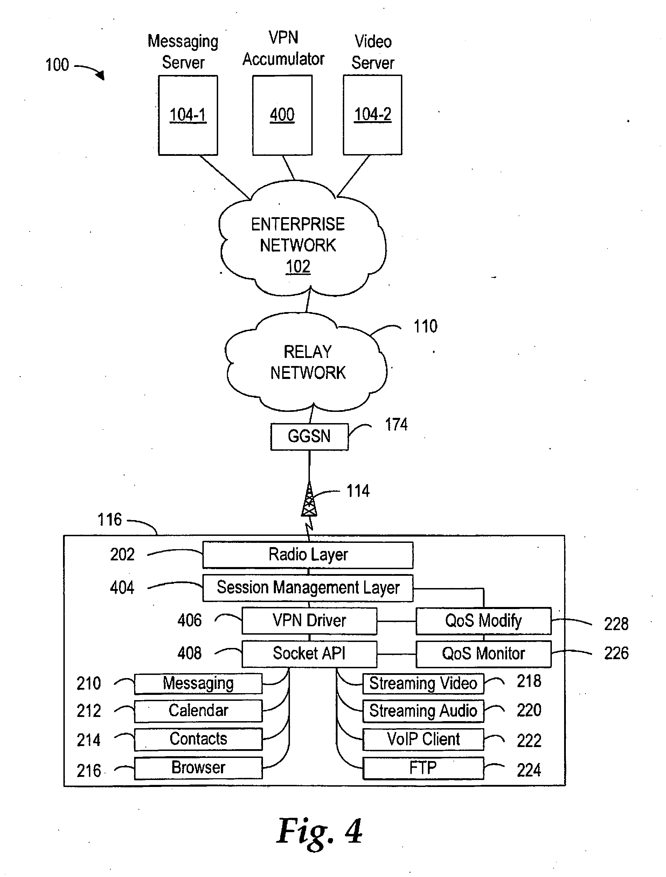

Figure 4 depicts a block diagram of network environment 100 focused on certain functional aspects of the architecture. While Figure 4 and related figures explicitly relate to the use of a Virtual Private Network (VPN) as an example, those of skill in the art will appreciate that the arrangement and methodology disclosed therein is generally applicable to architectures employing a number of different types of secure communication channels, including but not limited to virtual private networks. Messaging server 104-1, streaming video server 104-2 and Virtual Private Network (VPN) accumulator 400 are shown in communication with enterprise network 102. Messaging server 104-1 and streaming video server 104-2 are tasked with running applications related to messaging and streaming video, respectively. VPN accumulator 400 is tasked with managing encryption and decryption of communications between enterprise network 102 and external devices, including mobile communication device 116. As discussed previously, enterprise network 102 is operably connected to trusted relay network 110, which is operably connected to mobile communication device 116 through GGSN 174 and base station 114.

Within mobile communication device 116, applications 208, which include messaging client 210, calendar client 212, contacts client 214, browser client 216, streaming video client 218, streaming audio client 220, VoIP client 222 and FTP client 224, are operably connected to session management (SM) layer 404 via socket application programming interface (API) 408 and virtual private network (VPN) driver 406. SM layer 404, in turn, communicates with base station 114 via radio layer 202.

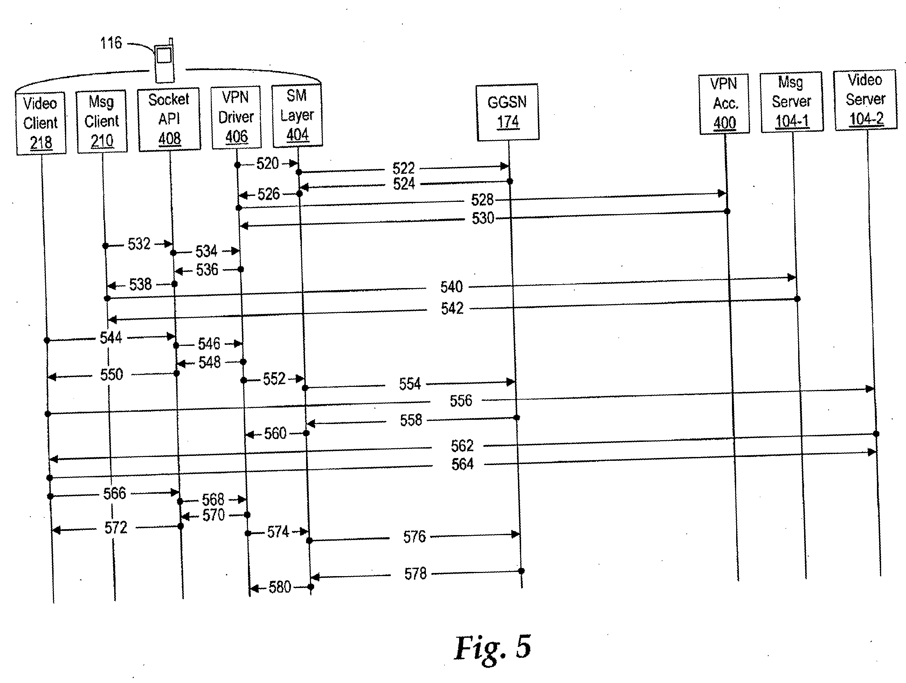

QoS monitor module 226 and QoS modify module 228 are operably connected to SM layer 404, VPN driver 406 and socket API 408, as well as to one another. In certain embodiments, all or a portion of these modules may be disposed within transport stack 206 described above. In alternate embodiments, all of these modules may be disposed external to transport stack 206. Those of skill in the art will appreciate that the above-described modules are intended to represent particular functions, and the functions represented may be embodied within more or fewer logic modules in a given application. The interaction and functional behavior of these modules is described in detail in connection with Figure 5, below.

Figure 5 depicts a message flow diagram according to one embodiment. Mobile communication device 116 is in secure communication, via a secure tunnel, with enterprise network 102 and running a set of applications, including messaging client 210 and streaming video client 218. It will be understood by those of skill in the art that applications 210, 218 are presented only as examples of applications requiring significantly different qualities of service, with messaging requiring a relatively low QoS, and streaming video requiring a relatively high QoS. At a certain point in time VPN driver 406 contacts GGSN 174 in order to establish a virtual private network (VPN) with enterprise network 102. This communication is represented by message 520 from VPN driver 406 to session management layer 404, message 522 from session management layer 404 to GGSN 174, message 524 from GGSN 174 to session management layer 404 and message 526 from session management layer 404 to VPN driver 406. As part of this initial handshaking, session management layer 404 will request a certain default quality of service (QoS). In order to conserve limited resources, the default QoS may provide for a limited bandwidth or relatively high latency, generally suitable for text messaging and perhaps limited or asynchronous audio communications, but generally not suitable for higher bandwidth applications such as streaming audio and/or streaming video or for low latency applications such as VoIP. Accordingly, the default QoS may not be suitable for all communications between mobile communication device 116 and enterprise network 102. Alternately, the default QOS may be relatively high, but may overkill for low-bandwidth applications, in which case a different QoS may be more appropriate when the default QoS is not necessary.

After initial handshaking with GGSN 174 is complete, mobile communication device 116 can contact enterprise network 102 via VPN accumulator 400 in order to establish the secure communications tunnel. This communication is represented by message 528 from VPN driver 406 to VPN accumulator 400 and message 530 from VPN accumulator 400 to VPN driver 406. After this handshaking process is complete, communications between mobile communication device 116 and enterprise network 102 will be encrypted between VPN driver 406 and VPN accumulator 400. This means that GGSN 174 and other nodes along the communication path between mobile communication device 116 and enterprise network 102 will not have access to the content of the communications between mobile communication device 116 and enterprise network 102. GGSN 174 will not, therefore, have access to sufficient information to modify the QoS provided to mobile communication device 116 in order to provide an optimal level of service to mobile communication device 116. If the communications between mobile communication device 116 and enterprise network 102 were not encrypted, GGSN 174 would be able to identify when the nature of the communications between mobile communication device 116 and enterprise network 102 are such that a higher QoS is necessary. Owing to the fact that these communications are encrypted, GGSN 174 has no such ability to monitor the type of communications being shared and to adjust the QoS as necessary.

In order to allow for a dynamic QoS capable of being adjusted on demand, the present disclosure provides for additional functionality within mobile communication device 116 suitable for requesting a different QoS when suitable and for returning to the default QOS when the default QOS is more suitable. In the embodiment shown in Figure 5, VPN driver 406 is operable to open multiple sockets within the secure tunnel as necessary, to close sockets as appropriate, and to modify the QoS provided to mobile communication device 116 as required by the demands of the applications running on mobile communication device 116.

Subsequent to the establishment of the secure tunnel between mobile communication device 116 and enterprise network 102, messaging client 210 requests a socket via VPN driver 406. This is represented by message 532 from messaging client 210 to socket API 408 and message 534 from socket API 408 to VPN driver 406. Upon receipt of the request, VPN driver 406 compares the details of the socket request to the current QoS provided by GGSN 174. If VPN driver 406 determines that a different QoS is suitable, VPN driver 406 can request a different QoS from GGSN 174. If VPN driver 406 determines that a different QoS is not suitable, VPN driver 406 will not request a different QoS from GGSN 174. In the present case, VPN driver 406 has determined that the service demands of messaging client 210 fit within the presently provided QoS. Accordingly, VPN driver 406 will not request a different QoS from GGSN 174. VPN driver 406 acknowledges the request as represented by message 536 from VPN driver 406 to socket API 408 and message 538 from socket API 408 to messaging client 210. Once the socket is opened, messaging client 210 and messaging server 104-1 can communicate, as represented by message 540 from messaging client 210 to messaging server 104-1 and message 542 from messaging server 104-1 to messaging client 210.

Subsequently, streaming video client 218 requests a socket from VPN driver 406. This is represented by message 544 from streaming video client 218 to socket API 408 and message 546 from socket API 408 to VPN driver 406. In this case, based on the characteristics of the request, VPN driver 406 will determine that a different QoS is stet in order to conduct this communication. In this case, a higher QOS is required. This may be, for example, a request for a socket suitable for VoIP or streaming video. It will be clear to those of skill in the art that a wide variety of communication types might require a different QoS than that required for messaging or browsing.

Whatever the details of the communication, VPN driver 406 will need to request the modified QoS from GGSN 174 in order to open a socket having the requested characteristics. VPN driver 406 first acknowledges the socket open request from streaming video client 218, as represented by message 548 from VPN driver 406 to socket API 408 and message 550 from socket API 408 to streaming video client 218. Then, VPN driver 406 requests the modified QoS from GGSN 174, as represented by message 552 from VPN driver 406 to session management layer 404 and message 554 from session management layer 404 to GGSN 174.

In certain cases, the communication between mobile communication device 116 and enterprise network 102 may be initiated prior to the acknowledgment, by GGSN 174, of the modified QoS. This is represented by message 556 from streaming video client 218 to streaming video server 104-2. Subsequent to the initiation of the communication, GGSN 174 modifies the QoS and acknowledges the modification to mobile communication device 116, as represented by message 558 from GGSN 174 to session management layer 404 and message 560 from session management layer 404 to VPN driver 406.

Having established a secure channel having an acceptable QoS for streaming video traffic, streaming video server 104-2 and streaming video client 218 conduct a streaming video session, as represented by message 562 from streaming video server 104-2 to streaming video client 218 and message 564 from streaming video client 218 to streaming video server 104-2. Once the streaming video session is complete, streaming video client 218 notifies VPN driver 406, via socket API 408, that the enhanced QoS is no longer necessary. This is represented by message 566 from streaming video client 218 to socket API 408 and message 568 from socket API 408 to VPN driver 406. VPN driver 406 then acknowledges the notification, as represented by message 570 from VPN driver 406 to socket API 408 and message 572 from socket API 408 to streaming video client 218.

After receiving the notification of reduced QoS requirements, VPN driver 406 notifies GGSN 174 of the reduced requirement, as represented by message 574 from VPN driver 406 to session management layer 404 and message 576 from session management layer 404 to GGSN 174. GGSN 174 then acknowledges the notification, as represented by message 578 from GGSN 174 to session management layer 404 and message 580 from session management layer 404 to VPN driver 406.

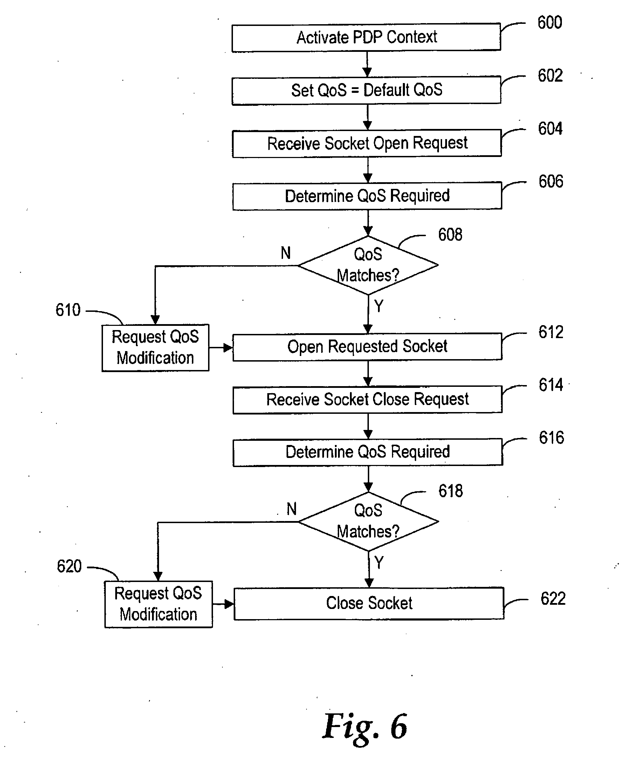

Figure 6 illustrates, in flow chart form, the communication patterns shown in Figure 5. Process flow begins in block 600, wherein a PDP context is activated. In block 602, the QoS for this PDP context is set to a default QoS. In block 604, a socket open request is received from an application.

In block 606, the most suitable QoS is determined. Process flow from decision block 608 depends upon whether there is a match between the QoS most suitable and the QoS provided. If there is a mismatch, process flow proceeds to block 610, wherein a QoS modification is requested. If there is not a mismatch, process flow proceeds directly to block 612, where the requested socket is opened.

At a later point in time, a request is received to close the socket, as represented by block 614. The QoS that will be required once the socket is closed is determined in block 616. Process flow from decision block 618 depends on whether there is a match between the resources which will be most suitable after the socket is closed and the current resources provided. If there is a mismatch between the suitable resources and the resources provided, process flow proceeds to block 620, where a QoS modification is requested. If there is not a mismatch, process flow proceeds directly to block 622, where the socket is closed.

It is believed that the operation and construction of the embodiments of the present disclosure will be apparent from the Detailed Description set forth above. As noted above, while the foregoing disclosure explicitly relates to the use of a Virtual Private Network (VPN) as an example, those of skill in the art will appreciate that the arrangement and methodology disclosed therein is generally applicable to architectures employing a number of different types of secure communication channels, including but not limited to virtual private networks. While the exemplary embodiments shown and described may have been characterized as being preferred, it should be readily understood that various changes and modifications could be made therein without departing from the scope of the present disclosure as set forth in the following claims.

## Claims

1. A mobile communication device (116) comprising:
a secure channel driver (406) operable to establish a secure tunnel between the mobile communication, device (116) and a remote network (102) via a wireless network (112) and to open multiple sockets within the secure tunnel as necessary;
a first client application selected from a messaging client application (210), a calendar/scheduler client application (212), a contacts management client application (214), or a browser client application (216) associated with a first quality of service and operable to communicate with a first server application via a first socket within the secure tunnel;
a second client application selected from a streaming video client application (218), a streaming audio client application (220), a VoIP client application (222), or an FTP client application (224) associated with a second quality of service different from the first quality of service and operable to communicate with a second server application via a second socket within the secure tunnel; and
a quality of service modification module (228) operable to request the second quality of service from a gateway support node (174) within the wireless network (112) when the second quality of service is appropriate and to request a quality of service different from the second quality of service when the second quality of service is not appropriate.

2. The mobile communication device (116) as recited in claim 1 wherein the wireless network (112) is one of a GSM network, an Enhanced Data Rates for GSM Evolution, EDGE, network, an Integrated Digital Enhanced Network, IDEN, a Universal Mobile Telephone System, UMTS, network, a Code Division Multiple Access, CDMA, network or any 3rd Generation, 3G, network.

3. The mobile communication device (116) as recited in claim 1 further comprising a quality of service monitor (226) operable to identify when the second quality of service is not appropriate.

4. The mobile communication device (116) as recited in claim 1 wherein the service modification module is operable to request the first quality of service from the wireless network (112) when the second quality of service is not appropriate.

5. The mobile communication device (116) as recited in claim 1 wherein the quality of service modification module (228) comprises a portion of a transport stack (206) within the mobile communication device (116).

6. A method of dynamically modifying the quality of service provided to a mobile communication device (116), the method comprising:
establishing a secure tunnel between the mobile communication device (116) and a remote network (102) through a wireless network (112) via a secure channel driver (406) operable to open multiple sockets within the secure tunnel as necessary;
opening a first socket within the secure tunnel between the mobile communication device (116) and a remote server (104-1);
communicating at a first quality of service through the first socket within the secure channel, wherein the first quality of service is associated with one of a messaging client application (210), a contacts management client application (214), a calendar management application or a browser application (216);
determining that a second quality of service, associated with a second application and different from the first quality of service, is appropriate, wherein the second quality of service is associated with one of a streaming audio client (220), a streaming video client (218), a VoIP client (222) or an FTP client (224);
requesting, from a gateway support node (174) associated with the wireless network (112), the second quality of service;
opening a second socket within the secure tunnel between the mobile communication device (116) and a remote server (104-2);
communicating at the second quality of service through the second socket within the secure tunnel established between the mobile communication device (116) and a remote network (102) through the wireless network (112); and
requesting a different quality of service from the gateway support node (174) when the second quality of service is not appropriate.

7. The method of dynamically modifying the quality of service provided to a mobile communication device (116) as recited in claim 6 wherein the wireless network (112) is one of a GSM, network, an Enhanced Data Rates for GSM Evolution, EDGE, network, an Integrated Digital Enhanced Network, IDEN, a Universal Mobile Telephone System, UMTS, network, a Code Division Multiple Access, CDMA, network or any 3rd Generation, 3G, network.

8. The method of dynamically modifying the quality of service provided to a mobile communication device (116) as recited in claim 6 further comprising the step of identifying when the second quality of service is not appropriate.

9. The method of dynamically modifying the quality of service provided to a mobile communication device (116) as recited in claim 6 further comprising the step of requesting the first quality of service from the wireless network (112) when the second quality of service is not appropriate.

10. The method of dynamically modifying the quality of service provided to a mobile communication device (116) as recited in claim 6 wherein the step of determining that a second quality of service, higher than the first quality of service, is appropriate is performed by a quality of service monitor (226) within the mobile communication device (116).

11. A communications node (400) comprising:
means for establishing a secure tunnel between the mobile communication device (116) and a remote network (102) through a wireless network (112) and for opening multiple sockets within the secure tunnel as necessary;
means for opening a first socket within the secure tunnel between the mobile communication device (116) and a remote server (104-1);
means for supporting communication between a mobile communication device (116) and a remote network (102) via a first socket within the secure tunnel at a first quality of service associated with a first application, wherein the first quality of service is associated with one of a messaging client application (210), a contacts management client application (214), a calendar management application or a browser application (216), each operable to execute on the mobile communication device (116);
means for determining that a second quality of service, associated with a second application and different from the first quality of service, is appropriate, wherein the second quality of service is associated with one of a streaming audio client (220), a streaming video client (218), a VoIP client (222) or an FTP client (224), each operable to execute on the mobile communication device (116);
means for requesting, from a gateway support node (174) associated with the wireless network (112), the second quality of service;
means for opening a second socket within the secure tunnel;
means for communicating through the second socket within the secure tunnel; and
means for requesting a different quality of service from the gateway support node (174) when the second quality of service is not appropriate.

12. The communications node as recited in claim 11 wherein the wireless network (112) is one of a GSM network, an Enhanced Data Rates for GSM Evolution, EDGE, network, an Integrated Digital Enhanced Network, IDEN, a Universal Mobile Telephone System, UMTS, network, a Code Division Multiple Access, CDMA, network or any 3rd Generation, 3G, network.

13. The communications node (400) as recited in claim 11 further comprising means for identifying when the second quality of service is not appropriate based on an indication from the mobile communication device (116).

14. The communications node (400) as recited in claim 11 further comprising means for providing the first quality of service from the wireless network (112) when the second quality of service is not appropriate.

## Patentansprüche

1. Mobile Kommunikationsvorrichtung (116), die aufweist:
einen sicheren Kanal-Treiber (406), der betriebsfähig ist, einen sicheren Tunnel zwischen der mobilen Kommunikationsvorrichtung (116) und einem entfernten Netzwerk (102) über ein drahtloses Netzwerk (112) herzustellen und mehrere Sockets in dem Tunnel zu öffnen, wenn erforderlich;
eine erste Client-Anwendung, die ausgewählt ist aus einer Messaging-Client-Anwendung (210), einer Kalender/Scheduler-Client-Anwendung (212), einer Kontakteverwaltung-Client-Anwendung (214) oder einer Browser-Client-Anwendung (216), die zu einer ersten Dienstqualität gehört und betriebsfähig ist, mit einer ersten Server-Anwendung über einen ersten Socket in dem sicheren Tunnel zu kommunizieren;
eine zweite Client-Anwendung, die ausgewählt ist aus einer "Streaming Video"-Client-Anwendung (218), einer "StreamingAudio"-Client-Anwendung (220), einer VoIP-Client-Anwendung (222) oder einer FTP-Client-Anwendung (224), die zu einer zweiten Dienstqualität gehört, die von der ersten Dienstqualität verschieden ist, und betriebsfähig ist, mit einer zweiten Server-Anwendung über einen zweiten Socket in dem sicheren Tunnel zu kommunizieren; und
ein Dienstqualität-Modifikationsmodul (228), das betriebsfähig ist zum Anfordern der zweiten Dienstqualität von einem Gateway-Unterstützungs-Knoten (174) in dem drahtlosen Netzwerk (112), wenn die zweite Dienstqualität geeignet ist, und zum Anfordern einer Dienstqualität, die von der zweiten Dienstqualität verschieden ist, wenn die zweite Dienstqualität nicht geeignet ist.

2. Mobile Kommunikationsvorrichtung (116) gemäß Anspruch 1, wobei das drahtlose Netzwerk (112) eines aus einem GSM-Netzwerk, einem EDGE(Enhanced Data Rates for GSM Evolution)-Netzwerk, einem IDEN (Integrated Digital Enhanced Network), einem UMTS(Universal Mobile Telephone System)-Netzwerk, einem CDMA(Code Division Multiple Access)-Netzwerk oder einem 3G(3rd Generation)-Netzwerk ist.

3. Mobile Kommunikationsvorrichtung (116) gemäß Anspruch 1, die weiter aufweist einen Dienstqualität-Monitor (226), der betriebsfähig ist, zu identifizieren, wenn die zweite Dienstqualität nicht geeignet ist.

4. Mobile Kommunikationsvorrichtung (116) gemäß Anspruch 1, wobei das Dienst-Modifikationsmodul betriebsfähig ist zum Anfordern der ersten Dienstqualität von dem drahtlosen Netzwerk (112), wenn die zweite Dienstqualität nicht geeignet ist.

5. Mobile Kommunikationsvorrichtung (116) gemäß Anspruch 1, wobei das Dienstqualität-Modifikationsmodul (228) einen Teil eines Transportstapels (206) in der mobilen Kommunikationsvorrichtung (116) aufweist.

6. Verfahren zum dynamischen Modifizieren der Dienstqualität, die für eine mobile Kommunikationsvorrichtung (116) vorgesehen ist, wobei das Verfahren aufweist:
Herstellen eines sicheren Tunnels zwischen der mobilen Kommunikationsvorrichtung (116) und einem entfernten Netzwerk (102) über ein drahtloses Netzwerk (112) über einen sicheren Kanal-Treiber (406), der betriebsfähig ist, mehrere Sockets in dem sicheren Tunnel zu öffnen, wenn erforderlich;
Öffnen eines ersten Sockets in dem sicheren Tunnel zwischen der mobilen Kommunikationsvorrichtung (116) und einem entfernten Server (104-1);
Kommunizieren mit einer ersten Dienstqualität über den ersten Socket in dem sicheren Kanal, wobei die erste Dienstqualität zu einem gehört aus einer Messaging-Client-Anwendung (210), einer Kontakteverwaltung-Client-Anwendung (214), einer Kalender-Verwaltungs-Anwendung (212) oder einer Browser-Anwendung (216);
Bestimmen, dass eine zweite Dienstqualität, die zu einer zweiten Anwendung gehört und von der ersten Dienstqualität verschieden ist, geeignet ist, wobei die zweite Dienstqualität zu einem aus einem "Streaming Audio"-Client (220), "Streaming Video"-Client (218), VoIP-Client (222) oder FTP-Client (224) gehört;
Anfordern von einem Gateway-Unterstützungs-Knoten (174), der zu dem drahtlosen Netzwerk (112) gehört, der zweiten Dienstqualität;
Öffnen eines zweiten Sockets in dem sicheren Tunnel zwischen der mobilen Kommunikationsvorrichtung (116) und einem entfernten Server (104-2);
Kommunizieren mit der zweiten Dienstqualität über den zweiten Socket in dem sicheren Tunnel, der zwischen der mobilen Kommunikationsvorrichtung (116) und einem entfernten Netzwerk (102) über das drahtlose Netzwerk (112) hergestellt ist; und
Anfordern einer anderen Dienstqualität von dem Gateway-Unterstützungs-Knoten (174), wenn die zweite Dienstqualität nicht geeignet ist.

7. Verfahren zum dynamischen Modifizieren der Dienstqualität, die für eine mobile Kommunikationsvorrichtung (116) vorgesehen ist, gemäß Anspruch 6, wobei das drahtlose Netzwerk (112) eines aus einem GSM-Netzwerk, einem EDGE(Enhanced Data Rates for GSM Evolution)-Netzwerk, einem IDEN (Integrated Digital Enhanced Network), einem UMTS(Universal Mobile Telephone System)-Netzwerk, einem CDMA(Code Division Multiple Access)-Netzwerk oder einem 3G(3rd Generation)-Netzwerk ist.

8. Verfahren zum dynamischen Modifizieren der Dienstqualität, die für eine mobile Kommunikationsvorrichtung (116) vorgesehen ist, gemäß Anspruch 6, das weiter aufweist den Schritt eines Identifizierens, wenn die zweite Dienstqualität nicht geeignet ist.

9. Verfahren zum dynamischen Modifizieren der Dienstqualität, die für eine mobile Kommunikationsvorrichtung (116) vorgesehen ist, gemäß Anspruch 6, das weiter aufweist den Schritt eines Anforderns der ersten Dienstqualität von dem drahtlosen Netzwerk (112), wenn die zweite Dienstqualität nicht geeignet ist.

10. Verfahren zum dynamischen Modifizieren der Dienstqualität, die für eine mobile Kommunikationsvorrichtung (116) vorgesehen ist, gemäß Anspruch 6, wobei der Schritt des Bestimmens, dass eine zweite Dienstqualität, die höher ist als die erste Dienstqualität, geeignet ist, durch einen Dienstqualität-Monitor (226) in der mobilen Kommunikationsvorrichtung (116) durchgeführt wird.

11. Kommunikationsknoten (400), der aufweist:
Mittel zum Herstellen eines sicheren Tunnels zwischen der mobilen Kommunikationsvorrichtung (116) und einem entfernten Netzwerk (102) über ein drahtloses Netzwerk (112) und zum Öffnen von mehreren Sockets in dem sicheren Tunnel, wenn erforderlich;
Mittel zum Öffnen eines ersten Sockets in dem sicheren Tunnel zwischen der mobilen Kommunikationsvorrichtung (116) und einem entfernten Server (104-1);
Mittel zum Unterstützen einer Kommunikation zwischen einer mobilen Kommunikationsvorrichtung (116) und einem entfernten Netzwerk (102) über einen ersten Socket in dem sicheren Tunnel mit einer ersten Dienstqualität, die zu einer ersten Anwendung gehört, wobei die erste Dienstqualität zu einem gehört aus einer Messaging-Client-Anwendung (210), einer Kontakteverwaltung-Client-Anwendung (214), einer Kalender-Verwaltungs-Anwendung oder einer Browser-Anwendung (216), die jeweils betriebsfähig sind, auf der mobilen Kommunikationsvorrichtung (116) ausgeführt zu werden;
Mittel zum Bestimmen, dass eine zweite Dienstqualität, die zu einer zweiten Anwendung gehört und von der ersten Dienstqualität verschieden ist, geeignet ist, wobei die zweite Dienstqualität zu einem aus einem "Streaming Audio"-Client (220), "Streaming Video"-Client (218), VoIP-Client (222) oder FTP-Client (224) gehört, die jeweils betriebsfähig sind, auf der mobilen Kommunikationsvorrichtung (116) ausgeführt zu werden;
Mittel zum Anfordern von einem Gateway-Unterstützungs-Knoten (174), der zu dem drahtlosen Netzwerk (112) gehört, der zweiten Dienstqualität;
Mittel zum Öffnen eines zweiten Sockets in dem sicheren Tunnel;
Mittel zum Kommunizieren über den zweiten Socket in dem sicheren Tunnel; und
Mittel zum Anfordern einer anderen Dienstqualität von dem Gateway-Unterstützungs-Knoten (174), wenn die zweite Dienstqualität nicht geeignet ist.

12. Kommunikationsknoten gemäß Anspruch 11, wobei das drahtlose Netzwerk (112) eines aus einem GSM-Netzwerk, einem EDGE(Enhanced Data Rates for GSM Evolution)-Netzwerk, einem IDEN (Integrated Digital Enhanced Network), einem UMTS(Universal Mobile Telephone System)-Netzwerk, einem CDMA(Code Division Multiple Access)-Netzwerk oder einem 3G(3rd Generation)-Netzwerk ist.

13. Kommunikationsknoten (400) gemäß Anspruch 11, der weiter aufweist Mittel zum Identifizieren, wenn die zweite Dienstqualität nicht geeignet ist, basierend auf einer Anzeige von der mobilen Kommunikationsvorrichtung (116).

14. Kommunikationsknoten (400) gemäß Anspruch 11, der weiter aufweist Mittel zum Vorsehen der ersten Dienstqualität von dem drahtlosen Netzwerk (112), wenn die zweite Dienstqualität nicht geeignet ist.

## Revendications

1. Dispositif de communication mobile (116), comprenant :
un pilote de canal sécurisé (406), en mesure d'établir un tunnel sécurisé entre le dispositif de communication mobile (116) et un réseau distant (102), via un réseau sans fil (112), et d'ouvrir de multiples interfaces de connexion au sein du tunnel sécurisé si nécessaire ;
une première application cliente, sélectionnée parmi une application cliente de messagerie (210), une application cliente d'agenda/calendrier (212), une application cliente de gestion de contacts (214) et une application cliente de navigation (216), associée à une première qualité de service et en mesure de communiquer avec une première application serveur, à l'aide d'une première interface de connexion au sein du tunnel sécurisé ;
une seconde application cliente, sélectionnée parmi une application cliente de diffusion continue vidéo (218), une application cliente de diffusion continue audio (220), une application cliente de VoIP (222) et une application cliente de FTP (224), associée à une seconde qualité de service, différente de la première qualité de service, et en mesure de communiquer avec une seconde application serveur, à l'aide d'une seconde interface de connexion au sein du tunnel sécurisé ; et
un module de modification de la qualité de service (228), en mesure de demander la seconde qualité de service à un noeud d'assistance de passerelle (174) sur le réseau sans fil (112) lorsque la seconde qualité de service est appropriée et de demander une qualité de service différente de la seconde qualité de service lorsque la seconde qualité de service n'est pas appropriée.

2. Dispositif de communication mobile (116) selon la revendication 1, dans lequel le réseau sans fil (112) est l'un des suivants : un réseau GSM, un réseau EDGE, pour *« Enhanced Data Rates for Global System for Mobile [GSM] Evolution* » - Évolution pour débits de données améliorés sur GSM, un réseau IDEN, pour « *Integrated Digital Enhanced Network* » - Réseau numérique intégré amélioré, un réseau UMTS, pour « *Universal Mobile Telecommunications System* » - Système universel de télécommunication mobile, un réseau AMRC, pour « Accès multiple à répartition par code », ou un réseau 3G, pour troisième génération, quelconque.

3. Dispositif de communication mobile (116) selon la revendication 1, comprenant en outre un moyen de surveillance de la qualité de service (226), en mesure de déterminer si la seconde qualité de service n'est pas appropriée.

4. Dispositif de communication mobile (116) selon la revendication 1, dans lequel le module de modification de service est en mesure de demander au réseau sans fil (112) la première qualité de service lorsque la seconde qualité de service n'est pas appropriée.

5. Dispositif de communication mobile (116) selon la revendication 1, dans lequel le module de modification de la qualité de service (228) comprend une partie d'une pile de transport (206) au sein du dispositif de communication mobile (116).

6. Procédé de modification dynamique de la qualité de service assurée à un dispositif de communication mobile (116), le procédé comprenant les étapes consistant à :
établir un tunnel sécurisé entre le dispositif de communication mobile (116) et un réseau distant (102), via un réseau sans fil (112), à l'aide d'un pilote de canal sécurisé (406) en mesure d'ouvrir plusieurs interfaces de connexion au sein du tunnel sécurisé si nécessaire ;
ouvrir une première interface de connexion au sein du tunnel sécurisé entre le dispositif de communication mobile (116) et un serveur distant (104-1) ;
communiquer avec une première qualité de service à l'aide de la première interface de connexion au sein du tunnel sécurisé, dans lequel la première qualité de service est associée avec une application parmi une application cliente de messagerie (210), une application cliente de gestion de contacts (214), une application de gestion d'agenda et une application de navigation (216) ;
déterminer qu'une seconde qualité de service est appropriée, qui est associée à une seconde application et différente de la première qualité de service, dans lequel la seconde qualité de service est associée à un client parmi un client de diffusion continue audio (220), un client de diffusion continue vidéo (218), un client de VoIP (222) et un client FTP (224) ;
demander la seconde qualité de service à un noeud d'assistance de passerelle (174) associé au réseau sans fil (112) ;
ouvrir une seconde interface de connexion au sein du tunnel sécurisé entre le dispositif de communication mobile (116) et un serveur distant (104-2) ;
communiquer avec la seconde qualité de service, à l'aide de la seconde interface de connexion au sein du tunnel sécurisé établi entre le dispositif de communication mobile (116) et un réseau distant (102), via le réseau sans fil (112) ; et
demander au noeud d'assistance de passerelle (174) une qualité de service différente lorsque la seconde qualité de service n'est pas appropriée.

7. Procédé de modification dynamique de la qualité de service assurée à un dispositif de communication mobile (116), selon la revendication 6, dans lequel le réseau sans fil (112) est l'un des suivants : un réseau GSM, un réseau EDGE, un réseau IDEN, un réseau UMTS, un réseau AMRC ou un réseau 3G quelconque.

8. Procédé de modification dynamique de la qualité de service assurée à un dispositif de communication mobile (116), selon la revendication 6, comprenant en outre l'étape consistant à déterminer quand la seconde qualité de service n'est pas appropriée.

9. Procédé de modification dynamique de la qualité de service assurée à un dispositif de communication mobile (116), selon la revendication 6, comprenant en outre l'étape consistant à demander la première qualité de service au réseau sans fil (112) lorsque la seconde qualité de service n'est pas appropriée.

10. Procédé de modification dynamique de la qualité de service assurée à un dispositif de communication mobile (116), selon la revendication 6, dans lequel l'étape consistant à déterminer qu'une seconde qualité de service, supérieure à la première qualité de service, est appropriée, est exécutée par un moyen de surveillance de la qualité de service (226) au sein du dispositif de communication mobile (116).

11. Noeud de communication (400), comprenant :
un moyen destiné à établir un tunnel sécurisé entre le dispositif de communication mobile (116) et un réseau distant (102), via un réseau sans fil (112), et d'ouvrir de multiples interfaces de connexion au sein du tunnel sécurisé si nécessaire ;
un moyen destiné à ouvrir une première interface de connexion au sein du tunnel sécurisé entre un dispositif de communication mobile (116) et un serveur distant (104-1) ;
un moyen destiné à supporter une communication entre un dispositif de communication mobile (116) et un réseau distant (102), à l'aide d'une première interface de connexion au sein du tunnel sécurisé, avec une première qualité de service associée à une première application, dans lequel la première qualité de service est associée à une application cliente parmi une application cliente de messagerie (210), une application cliente de gestion de contacts (214), une application de gestion d'agenda et une application de navigation (216), chacune étant en mesure de s'exécuter sur le dispositif de communication mobile (116) ;
un moyen destiné à déterminer qu'une seconde qualité de service, associée à une seconde application et différente de la première qualité de service, est appropriée, dans lequel la seconde qualité de service est associée à une application cliente parmi un client de diffusion continue audio (220), un client de diffusion continue vidéo (218), un client de VoIP (222) et un client de FTP (224), chacun étant en mesure de s'exécuter sur le dispositif de communication mobile (116) ;
un moyen destiné à demander la seconde qualité de service à un noeud d'assistance de passerelle (174) associé au réseau sans fil (112) ;
un moyen destiné à ouvrir une seconde interface de connexion au sein du tunnel sécurisé ;
un moyen destiné à communiquer à l'aide de la seconde interface de connexion au sein du tunnel sécurisé ; et
un moyen destiné à demander une qualité de service différente au noeud d'assistance de passerelle (174) lorsque la seconde qualité de service n'est pas appropriée.

12. Noeud de communication selon la revendication 11, dans lequel le réseau sans fil (112) est l'un des suivantes :
un réseau GSM, un réseau EDGE, un réseau IDEN, un réseau UMTS, un réseau AMRC ou un réseau 3G quelconque.

13. Noeud de communication (400) selon la revendication 11, comprenant en outre un moyen destiné à déterminer quand la seconde qualité de service n'est pas appropriée sur la base d'une indication provenant du dispositif de communication mobile (116).

14. Noeud de communication (400) selon la revendication 11, comprenant en outre un moyen destiné à fournir la première qualité de service sur le réseau sans fil (112) lorsque la seconde qualité de service n'est pas appropriée.
